# EUROPEAN PATENT SPECIFICATION

(11) **EP 3 858 707 B1**
(45) Date of publication and mention of the grant of the patent: **30.11.2022**
(21) Application number: 21153737.8
(22) Date of filing: 27.01.2021
(51) Int. Cl.: B62B 3/00, B62B 5/00, B62B 5/02, B62B 5/04, B62B 7/04, B62B 9/00, B62B 9/02, B62B 9/08

(54) **CART AND METHOD FOR OPERATING THE SAME**
WAGEN UND VERFAHREN ZUM BETRIEB DAVON
CHARIOT ET SON PROCÉDÉ DE FONCTIONNEMENT

(30) Priority: 28.01.2020 KR 20200010002
(43) Date of publication of application: 04.08.2021
(73) Proprietor: LG Electronics Inc., Seoul 07336 (KR)
(72) Inventor: LEE, Younsung, 06772 Seoul (KR); LEE, Soomi, 06772 Seoul (KR); KOH, Sunggyu, 06772 Seoul (KR); SON, Hyojun, 06772 Seoul (KR)
(74) Representative: Vossius & Partner Patentanwälte Rechtsanwälte mbB

(56) References cited:
- CN-A- 108 275 189
- KR-A- 20110 105 450
- KR-B1- 101 855 035
- US-A1- 2014 345 956

## Description

### BACKGROUND OF THE INVENTION

### 1. Field of the invention

The present invention relates to a cart and an operation method thereof, and more particularly to a cart and an operation method thereof enabling a user to push the cart with less force due to a structure in which wheels are rotated by a motor.

### 2. Description of the Related Art

In general, a cart is a wheeled vehicle designed to transport goods or people. For example, carts are widely used for transporting goods in supermarkets, warehouses, etc.

In recent years, robot carts capable of traveling autonomously have been developed to transport goods or people.

Meanwhile, a stroller enabling a user, such as a parent, to transport a baby includes a seat in which a baby is accommodated, wheels provided under the seat, and a handle provided at the rear side of the seat.

Such a stroller needs to ensure the safety of a baby and to give convenience to a user such as a parent.

A user needs to push a cart in order to move the same. Because a cart is equipped with wheels, a user is capable of pushing the same on flat ground with little force. However, there is a problem in that greater force is required to move or control a cart on an uphill or downhill path.

In addition, there is a problem in that a user needs to use large force to push a cart or a stroller on a bumpy surface.

Therefore, research is increasingly conducted on a method enabling a user to move a cart with little force by rotating the wheels of a cart using a motor.

For example, Korean Patent Laid-Open Publication No. 10-2018-0078915 (published on July 10, 2018) discloses a stroller that is capable of being driven in an assist driving mode, in which wheels are rotated by a motor.

US 2014/345956 A1 relates to a manually propelled vehicle including a vehicle body, a grip for a user to grip when walking, a wheel for moving the vehicle body along with the walking user, a wheel driver that electromotively drives the wheel, a grip sensor that monitors distribution of pressure applied to the grip, and a controller that sets parameters of the wheel driver according to output of the grip sensor.

CN 108 275 189 A relates to a baby carriage system with electric power assistance. The baby carriage system comprises a baby carriage with idler wheels at the bottom, a power assistance system is arranged on the baby carriage, and comprises a force sensor, a control unit and a driving braking device, wherein the force sensor is used for detecting the force, changing a motion state, borne by the baby carriage; the control unit stores a PID algorithm; the driving braking device is used for executing the comparison result of the PID algorithm and the force, and acts on the idler wheels.

KR 101 855 035 B1 relates to a baby carriage comprising a body including a wheel, a frame coupled with the wheel, a seat supported by the frame, and a handle coupled to an upper portion of the frame; a braking unit installed in the body and restraining rotation of the wheel; a switch installed on the handle and turned on/off in accordance with gripping of the handle by a user; a load cell installed in the body and detecting whether a child is on the seat; and a control unit controlling the operation of the braking unit based on the sensed values of the switch and the load cell.

KR 2011 0105450 A relates to a rickshaw safety device and a rickshaw having the same. The safety device comprises a sensor unit for recognizing the dangerous situation of the rickshaw; a brake for restraining the movement of the rickshaw; a control unit operating the brake unit to restrict the movement of the rickshaw when a dangerous situation of the rickshaw is recognized; and a power supply unit for supplying power to the sensor unit, the brake unit, and the control unit.

When the wheels of a cart are rotated by a motor, if the rotation of the motor and the wheels is not controlled accurately, an accident is highly likely to occur.

Therefore, it is an object of the present invention to provide a cart and an operation method thereof capable of safely stopping movement using a brake-driving algorithm in a dangerous situation or an unintended situation.

It is an object of the present invention to provide a cart and an operation method thereof capable of stopping movement more reliably by recognizing a user intention and analyzing the traveling state thereof.

It is an object of the present invention to provide a cart and an operation method thereof capable of stopping movement in an optimal way depending on whether the cart is traveling on flat ground or on a slope.

It is an object of the present invention to provide a cart and an operation method thereof enabling a user to drive the cart with less force.

It is an object of the present invention to provide a cart and an operation method thereof enabling a user to drive the cart with less force on an uphill or downhill path.

The invention is specified by the independent claim. Preferred embodiments are defined in the dependent claims.

### SUMMARY OF THE INVENTION

In order to accomplish the above and other objects, a cart according to an embodiment of the present invention includes a controller configured to change a control parameter of a motor depending on whether the cart is located on a slope and to perform control such that a braking operation is performed in different ways depending on whether the motor is rotating, thereby realizing safe stoppage of the cart in various situations.

In order to accomplish the above and other objects, a cart according to an embodiment of the present invention includes a body having driving wheels mounted to the left and right sides thereof, a motor configured to rotate the driving wheels, a frame including a lower part connected to the body, the frame extending upwards from the lower part, a handle connected to the frame, a sensor unit including a tilt sensor configured to detect the tilt of the body and a touch sensor configured to detect whether the handle is grasped, and a controller configured to determine whether the cart is located on a slope based on data detected by the tilt sensor upon determining that the handle is not grasped based on data detected by the touch sensor, to change a control parameter of the motor depending on whether the cart is located on a slope, and to perform control such that a braking operation is performed in different ways depending on whether the motor is rotating, thereby realizing safe stoppage of the cart.

The sensor unit may further include a position detection sensor configured to detect rotation of the motor.

Alternatively, the cart may further include an output current detector configured to detect an output current output to the motor, and the controller may determine rotation of the motor based on the detected output current.

The controller may adjust the reverse rotational speed of the motor with respect to the rotating direction of the motor based on the tilt of the slope.

Upon determining that the tilt of the slope is greater than or equal to a threshold tilt value, the controller may brake the driving wheels.

Upon determining that the cart is located on a slope, the controller may reduce an integral control constant and a derivative control constant among proportional-integral-derivative (PID) control constants of the motor.

Alternatively, upon determining that the cart is located on a slope, the controller may perform proportional (P) control on the motor, and upon determining that the cart is located on flat ground, the controller may perform PID control on the motor.

Upon determining that the cart is located on flat ground and the motor is rotating, the controller may perform a braking operation by controlling the motor to rotate in a direction opposite the direction in which the motor is rotating.

Upon determining that the cart is located on flat ground and the motor is not rotating, the controller may stop applying current to the motor.

Upon determining that the cart is located on a slope and the motor is rotating, the controller may perform a braking operation by controlling the motor to rotate in a direction opposite the direction in which the motor is rotating.

Upon determining that the cart is located on a slope and the motor is not rotating, the controller may maintain application of current to the motor.

The sensor unit may further include a force detection sensor configured to detect the force applied to the handle, and the controller may control the motor based on data detected by the force detection sensor.

The frame may be located in the middle between the driving wheels in a leftward-rightward direction. The handle may include a left bar and a right bar, which are spaced apart from each other in the leftward-rightward direction at a position corresponding to the frame. The force detection sensor may be connected to the left bar and the right bar and may be coupled to the frame.

The driving wheels may include a first driving wheel mounted to the left side of the body and a second driving wheel mounted to the right side of the body. The motor may include a first motor configured to rotate the first driving wheel and a second motor configured to rotate the second driving wheel. The controller may drive the first motor and the second motor based on the magnitudes of force and torsion detected by the force detection sensor.

The force detection sensor may include a first sensor unit, which is connected to the left bar, a second sensor unit, which is connected to the right bar, and a bracket, which connects the first sensor unit and the second sensor unit and is coupled to the frame.

In order to accomplish the above and other objects, an operation method of a cart according to an embodiment of the present invention includes determining whether a handle is grasped by the user' s hands based on data detected by a force detection sensor or a touch sensor, determining whether the cart is located on a slope when the user' s hands are removed from the handle, setting a brake control parameter depending on whether the cart is located on a slope, and performing control such that a braking operation is performed in different ways depending on whether a motor is rotating.

The performing control may include, when it is determined that the cart is located on flat ground and the motor is rotating, performing a braking operation by controlling the motor to rotate in a direction opposite the direction in which the motor is rotating.

The performing control may include, when it is determined that the cart is located on flat ground and the motor is not rotating, stopping applying current to the motor.

The performing control may include, when it is determined that the cart is located on a slope and the motor is rotating, performing a braking operation by controlling the motor to rotate in a direction opposite the direction in which the motor is rotating.

The performing control may include, when it is determined that the cart is located on a slope and the motor is not rotating, maintaining application of current to the motor.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a perspective view of a stroller according to an embodiment of the present invention;
FIG. 2 is a perspective view showing a body, driving wheels, a motor, and a caster of the stroller shown in FIG. 1;
FIG. 3 is a perspective view showing a frame and a force detection sensor;
FIG. 4 is a perspective view showing the engagement of a force detection sensor, a bridge, and a handle;
FIG. 5 shows a force detection sensor, wherein FIG. 5(a) is a front view of the force detection sensor, and FIG. 5(b) is a perspective view showing the front of the force detection sensor;
FIG. 6 is a block diagram showing the control relationship between main components of a stroller according to an embodiment of the present invention;
FIG. 7 is a schematic internal block diagram of a controller according to an embodiment of the present invention;
FIG. 8 is an exemplary internal circuit diagram of the motor-driving unit shown in FIG. 7;
FIG. 9 is a flowchart showing an operation method of a stroller according to an embodiment of the present invention; and
FIG. 10 is a flowchart showing an operation method of a stroller according to an embodiment of the present invention.

### DETAILED DESCRIPTION OF THE PREFERRED EMBODIMENTS

Hereinafter, exemplary embodiments of the present invention will be described in detail with reference to the accompanying drawings. However, the present invention may be embodied in many different forms, and should not be construed as being limited to the embodiments set forth herein.

In the drawings, an illustration of parts unrelated to the description is omitted in order to clearly and briefly describe the present invention, and the same or extremely similar components are denoted by the same reference numerals throughout the specification.

As used herein, the terms "module" and "unit", with which the names of some components are suffixed, are assigned to facilitate preparation of this specification, and are not intended to suggest unique meanings or functions. Accordingly, the terms "module" and "unit" may be used interchangeably.

In the following description, the terms "first" and "second" are used to describe various constituent elements, but the constituent elements are not limited to the terms. These terms are used only to distinguish one constituent element from another.

In the specification, the term "cart" should be understood as including all means for transporting people, animals, or goods using wheels. For example, the term "cart" includes a general cart for transporting goods, a mobile robot for transporting people, animals, or goods, and a stroller enabling a parent to transport a baby. In the following description of the embodiments of the present invention, a stroller, which gives top priority to ensuring the safety of a baby, will be described by way of example.

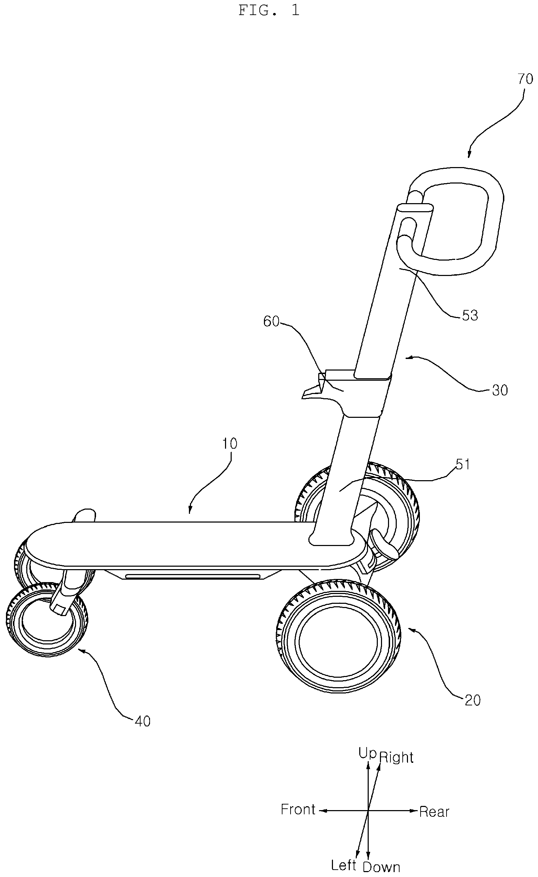

FIG. 1 is a perspective view of a stroller according to an embodiment of the present invention.

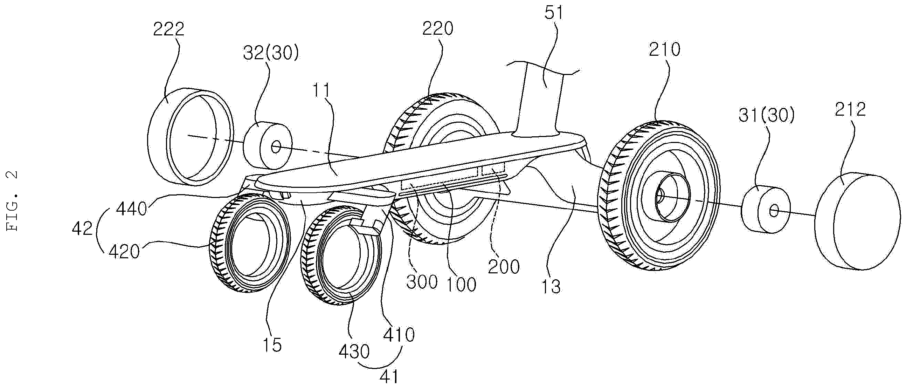

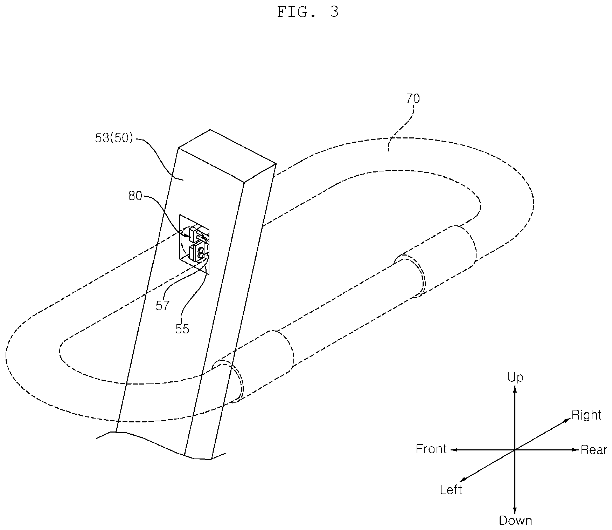

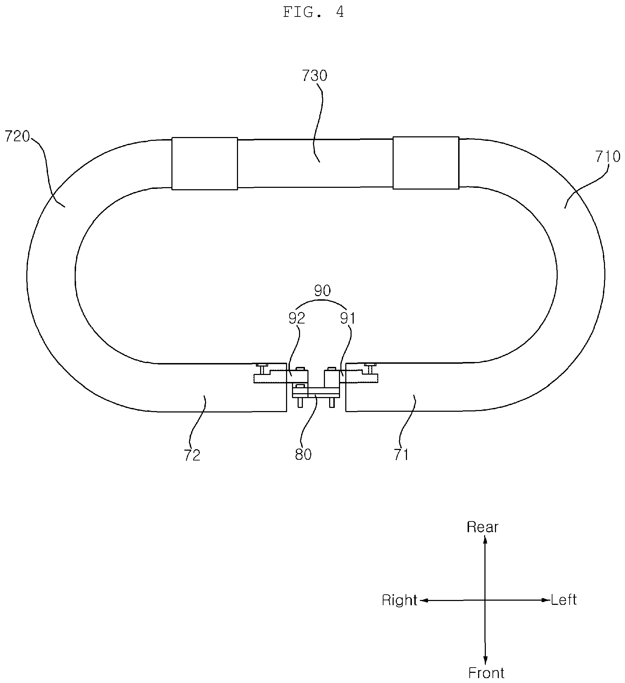

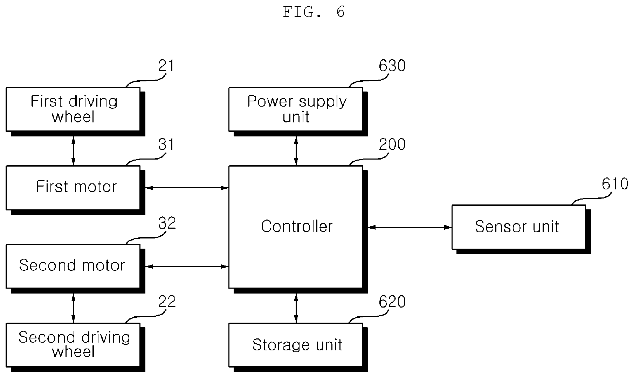

Referring to FIG. 1, a stroller according to an embodiment of the present invention includes a body 10, a pair of driving wheels 20 mounted to the left and right sides of the body 10, a motor 30 (refer to FIG. 2) configured to rotate the pair of driving wheels 20, a frame 50 connected to the body 10 and extending upwards, a handle 70 connected to the frame 50, and a force detection sensor 80 (refer to FIG. 3) configured to detect the force applied to the handle 70 and torsion of the handle 70 with respect to the frame 50. In addition, the stroller may further include a caster 40 configured to movably support the body 10, a cradle (not shown) configured to accommodate a baby, a mount 60 configured to couple the cradle to the frame 50 or the body 10, a bridge 90 (refer to FIG. 4) configured to couple the force detection sensor 80 to the handle 70, a controller 200 (refer to FIGs. 2 and 6) configured to control the operation of the motor 30 based on the value detected by the force detection sensor 80, a battery 300 (refer to FIG. 2) configured to supply power to the controller 200, the force detection sensor 80, and the motor 30, and a casing 100 (refer to FIG. 2) disposed under the body 10 and having a space formed therein to accommodate the controller 200, the motor 30, and the battery 300.

Although an embodiment of the present invention relates to a stroller, the stroller is similar to a cart for transporting goods, except that it includes the body 10, the wheels 20 and 40, the frame 50, and the handle 70. Hereinafter, the stroller will be described by way of example for convenience of description. However, the characteristics of the present invention may also apply to carts other than a stroller.

Due to the pair of driving wheels 21 and 22 mounted to the left and right sides of the body 10, the stroller is capable of being moved by the force of pushing or pulling the same by a user or the rotational force of the motor 30, which is transmitted to the driving wheels 20. Further, the caster 40 may be mounted to the body 10 so as to be spaced apart from the pair of driving wheels 21 and 22 in a forward-backward direction. The caster 40 may movably support the body 10.

As shown in the drawings, the pair of driving wheels 20 may be respectively disposed on the left and right sides of the body 10. As shown in FIG. 1, the pair of driving wheels 21 and 22 may be spaced apart from each other in a leftward-rightward direction, and the spacing distance therebetween may be greater than the width of the body 10 in the leftward-rightward direction.

Alternatively, unlike what is shown in FIG. 1, the width of the body 10 in the leftward-rightward direction may be greater than the spacing distance between the pair of driving wheels 21 and 22, and the pair of driving wheels 21 and 22 may be located under the body 10. In particular, in the case of a cart for transporting goods, it may be advantageous for the width of the body 10 to be greater than the spacing distance between the pair of driving wheels 21 and 22 in order to load a larger amount of goods. Hereinafter, the structure in which the spacing distance between the pair of driving wheels 21 and 22 is greater than the width of the body 10 in the leftward-rightward direction will be described by way of example, but the embodiment is not limited thereto.

The body 10 may be formed so as to be elongated in the forward-backward direction, rather than the leftward-rightward direction. The pair of driving wheels 21 and 22 may be mounted to the left-rear side and the right-rear side of the body 10, respectively, and the caster 40 may be mounted to the front side of the body 10. Due to this structure, the stroller is capable of being moved easily in the forward-backward direction.

The body 10, the caster 40, and the pair of driving wheels 21 and 22 will be described later in greater detail with reference to FIG. 2.

The frame 50 is connected to the body 10 and extends upwards. Here, upward extension of a component includes a configuration in which the component extends substantially vertically upwards and a configuration in which the component extends upwards while being inclined forwards or backwards. Preferably, the frame 50 may extend upwards while being inclined backwards in order to allow the force of pushing the handle 70 by a user to be easily transmitted to the body 10 via the frame 50.

The frame 50 may include a lower part 51 connected to the body 10. The frame 50 may include an upper part 53 connected to the handle 70. The frame 50 may extend upwards from the lower part 51, and may be inclined backwards from the lower part 51 to the upper part 53.

The frame 50 may be located in the middle between the pair of driving wheels 21 and 22 in the leftward-rightward direction. The body 10 may also be located in the middle between the pair of driving wheels 21 and 22 in the leftward-rightward direction. The frame 50 may be located in the middle of the body 10 in the leftward-rightward direction.

As shown in FIG. 1, the frame 50 may extend straight from the lower part 51 to the upper part 53, and may be located in the middle of the body 10 in the leftward-rightward direction. Alternatively, the frame 50 may include two lower parts, which are connected to the left and right sides of the body 10 and extend upwards such that the upper ends thereof meet, and an upper part, which extends upwards from the point at which the upper ends of the two lower parts meet. That is, the frame 50 may have an inverted "Y" shape.

The lower part 51 of the frame 50 may be connected to the rear side of the body 10. The lower part 51 of the frame 50 may be connected to the rear side of the upper surface of the body 10.

The frame 50 may be integrally formed with the body 10, or may be formed separately from the body 10, and the lower part 51 thereof may be engaged with the body 10. The body 10 may include a base 11 (refer to FIG. 2) forming the upper surface of the body 10. The frame 50 may be integrally formed with the base 11, or may be formed separately from the base 11 and may be engaged with the base 11.

In the frame 50, the mount 60 may be mounted between the upper part 53 and the lower part 51. The cradle (not shown), in which a baby is accommodated, may be mounted to the mount 60.

The handle 70 may be connected to the frame 50. The handle 70 may be connected to the upper part 53 of the frame 50. A user may push or pull the handle 70 to move the stroller.

FIG. 2 is a perspective view of a driving unit located at the lower side of the stroller. The body 10, the driving wheels 20, the motor 30, and the caster 40 constitute the driving unit.

Referring to FIG. 2, the body 10 may include a base 11 forming the upper surface of the body 10, a caster support part 15 coupled to the front side of the base 11 in order to support the caster 40, and a driving wheel support part 13 coupled to the rear side of the base 11 in order to support the driving wheels 20. The driving wheels 20 may be mounted to the rear side of the body 10, and the caster 40 may be mounted to the front side of the body 10.

The driving wheels 20 may include wheel bodies 210 and 220 configured to be rotated by rotational force transmitted thereto from the motor 30 or by movement of the body 10, and covers 212 and 222 configured to cover the side surfaces of the wheel bodies 210 and 220. The motor 30 may be disposed in the space formed between each of the wheel bodies 210 and 220 and a corresponding one of the covers 212 and 222.

The driving wheels 20 may include a first driving wheel 21, mounted to the left side of the body 10, and a second driving wheel 22, mounted to the right side of the body 10. The motor 30 may include a first motor 31, configured to rotate the first driving wheel 21, and a second motor 32, configured to rotate the second driving wheel 22.

The first driving wheel 21 may include a wheel body 210 and a cover 212, and the second driving wheel 22 may include a wheel body 220 and a cover 222. The first motor 31 for rotating the first driving wheel 21 may be disposed in the space formed between the cover 212 and the wheel body 210 of the first driving wheel 21, and the second motor 32 for rotating the second driving wheel 22 may be disposed in the space formed between the cover 222 and the wheel body 220 of the second driving wheel 22.

The driving wheels 20 may be rotatably supported by the driving wheel support part 13. The driving wheels 20 may rotate with the rotation center shafts C thereof fixed to the body 10 or the driving wheel support part 13.

The motor 30 may be disposed on the driving wheel support part 13 to rotate the driving wheels 20. Alternatively, the motor 30 may be disposed in each of the driving wheels 20 to rotate the same. The motor 30 shown in FIG. 2 is an in-wheel motor disposed in each of the driving wheels 20. The motor 30 may include a rotor (not shown) configured to transmit rotational force to the driving wheels 20 and a stator (not shown) fixed to the driving wheel support part 13.

The driving wheel support part 13 may protrude to the left and right from the rear side of the base 11. The portion of the driving wheel support part 13 that protrudes to the left may rotatably support the first driving wheel 21, and the portion of the driving wheel support part 13 that protrudes to the right may rotatably support the second driving wheel 22.

The driving wheel support part 13 may be disposed under the base 11. The driving wheel support part 13 may be coupled to the lower side of the base 11.

The caster 40 may be provided in a pair, and the pair of casters may be disposed on the left and right sides of the body 10, respectively. Specifically, the caster 40 may include a first caster 41, which is disposed on the left side of the body 10, and a second caster 42, which is disposed on the right side of the body 10.

The caster 40 may be rotatably supported by the caster support part 15. The caster 40 may include caster wheels 410 and 420, which rotate about a horizontal rotation center shaft, and caster shafts 430 and 440, which connect the caster wheels 410 and 420 and the caster support part 15.

The caster shafts 430 and 440 may protrude downwards from the caster support part 15, and may be rotatably supported by the caster support part 15. The caster shafts 430 and 440 may support the caster wheels 41 and 42 so that the caster wheels 41 and 42 are capable of rotating about the horizontal rotation center shaft. That is, unlike the driving wheels 20, the caster 40 may rotate about the horizontal rotation center shaft, and the horizontal rotation center shaft may rotate with respect to the body 10 or the caster support part 15, rather than being fixed. Therefore, a user is capable of easily change the direction in which the stroller is driven.

Unlike the driving wheels 20, the caster wheels 410 and 420 may not be connected to the motor 30. The caster wheels 410 and 420 may be manually rotated by rotation of the driving wheels 20 by the motor 30 or by movement of the body 10 by a user.

Alternatively, unlike what is shown in the drawings, the caster 40 may be one in number, and may be located in the middle of the body 10.

The body 10 may further include a casing 100 disposed under the base 11. The casing 100 may protrude downwards from the body 10 such that a space is formed between the body 10 and the casing 100. The controller 200 and the battery 300 may be disposed in the space. In addition, other electronic parts, such as a gyro force detection sensor (not shown), may be disposed in the space. In some embodiments, at least some of the internal parts, such as the controller 200 and the battery 300, may be disposed in the internal spaces in the handle 70 and the frame 50.

FIG. 3 is a perspective view of the frame, the force detection sensor, and the handle. The contour of the handle 70 is illustrated by dotted lines in order to show the force detection sensor 80.

FIG. 4 is a perspective view showing the engagement of the force detection sensor 80, the bridge 90, and the handle 70.

Referring to FIG. 3, the frame 50 may have a force detection sensor hole 55 formed in the upper portion thereof. The force detection sensor hole 55 may penetrate the frame 50 in the leftward-rightward direction, and may have a front surface, a rear surface 57, an upper surface, and a lower surface inside the frame 50.

The force detection sensor 80 may be disposed in the force detection sensor hole 55. The force detection sensor 80 may be engaged with the front surface of the force detection sensor hole 55. The force detection sensor 80 may be engaged with the front side of the force detection sensor hole 55.

The handle 70 may include a left bar 71 and a right bar 72, which are spaced apart from each other in the leftward-rightward direction. The force detection sensor 80 and the frame 50 may be disposed in the gap between the left bar 71 and the right bar 72. The force detection sensor hole 55 formed in the frame 50 may be located in the gap between the left bar 71 and the right bar 72.

Referring to FIG. 4, the handle 70 may include a left bar 71 and a right bar 72. The left bar 71 and the right bar 72 may be spaced apart from each other in the leftward-rightward direction. That is, the left bar 71 and the right bar 72 may be spaced apart from each other in a direction parallel to the rotation center shaft C of the pair of driving wheels 21 and 22. The left bar 71 and the right bar 72 may be spaced apart from each other, with the frame 50 interposed therebetween.

The handle 70 may further include a first grip 710, extending backwards from the left bar 71, and a second grip 720, extending backwards from the right bar 72. Each of the first grip 710 and the second grip 720 may be curved in a semicircular shape. The first grip 710 may have a left semicircular shape, and the second grip 720 may have a right semicircular shape.

The handle 70 may further include a third grip 730 connecting the first grip 710 and the second grip 720. The third grip 730 may have a straight line shape. The third grip 730 may be parallel to the left bar 71 and the right bar 72.

A user may grasp the left and right portions of the third grip 730 with the left and right hands to move the stroller. Alternatively, a user may grasp the first grip 710 with the left hand, and may grasp the second grip 720 with the right hand. This structure of the handle 70 enables a user to conveniently move the stroller according to the user's tendency and the situation.

The stroller according to the embodiment of the present invention may include a bridge 90 connecting the force detection sensor 80 to the handle. The bridge 90 may include a first bridge 91, engaged with the force detection sensor 80 and the left bar 71, and a second bridge 92, engaged with the force detection sensor 80 and the right bar 72.

The width of the force detection sensor 80 in the leftward-rightward direction may be less than the spacing distance between the left bar 71 and the right bar 72. Further, the force detection sensor 80 may be engaged with the bridge 90, and the bridge 90 may be engaged with the handle 70. Accordingly, it is possible to easily engage the frame 50, the force detection sensor 80, the bridge 90, and the handle 70.

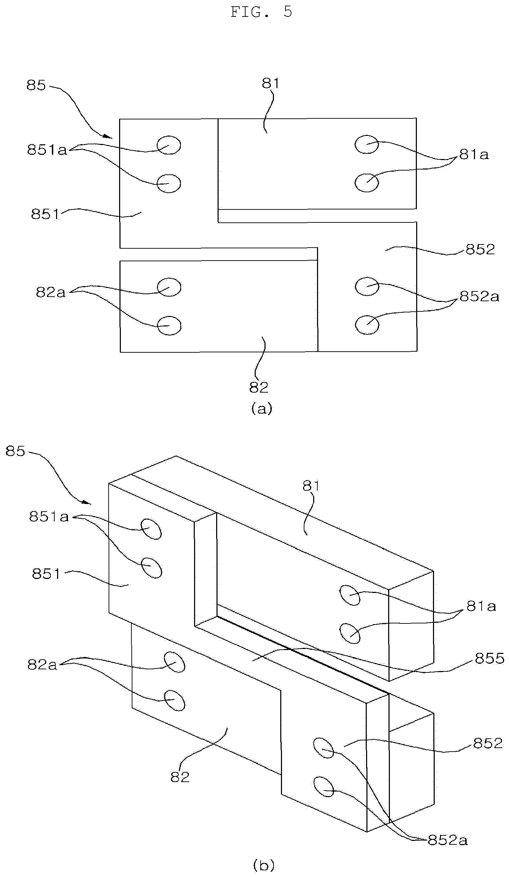

FIG. 5 shows the force detection sensor. FIG. 5(a) is a front view of the force detection sensor, and FIG. 5(b) is a perspective view showing the front of the force detection sensor.

Referring to FIG. 5(a), the force detection sensor 80 may include a first sensor unit 81 for detecting torsion of the left bar 71 with respect to the frame 50 and a second sensor unit 82 for detecting torsion of the right bar 72 with respect to the frame 50. The force detection sensor 80 may include a load cell. The load cell may measure force or load using a strain gauge that measures the strain of a structure. Each of the first sensor unit 81 and the second sensor unit 82 may include a load cell.

The magnitude and direction of the force applied to the handle 70 and torsion of the handle 70 with respect to the frame 50 may be measured by the load cell. The magnitude and direction of force applied to the handle 70 may determine torsion of the handle 70 with respect to the frame 50. Thus, torsion of the handle 70 with respect to the frame 50 may be expressed using both the magnitude and the direction of force.

The force detection sensor 80 may further include a bracket 85 coupled to the frame 50. The force detection sensor 80 may be firmly coupled to the frame 50 via the bracket 85, which is coupled to the frame 50.

The bracket 85 may connect the first sensor unit 81 and the second sensor unit 82. The bracket 85 may include a first coupling portion 851, to which the first sensor unit 81 is coupled, and a second coupling portion 852, to which the second sensor unit 82 is coupled. The first coupling portion 851 may be located on the right side of the second coupling portion 852, and the second coupling portion 852 may be located on the left side of the first coupling portion 851. Preferably, the first coupling portion 851 may be located on the right side with respect to the center of the bracket 85, and the second coupling portion 852 may be located on the left side with respect to the center of the bracket 85.

The first sensor unit 81 may be coupled to the first coupling portion 851, which is located on the right side, and the second sensor unit 82 may be coupled to the second coupling portion 852, which is located on the left side. The first sensor unit 81 and the second sensor unit 82 may be connected to the left bar 71 and the right bar 72, respectively, via the bridge 90, thereby minimizing the size of the space in which the force detection sensor 80 is disposed. Therefore, the force detection sensor 80 is capable of being efficiently disposed in the small space between the left bar 71 and the right bar 72 within the width of the frame 50 in the leftward-rightward direction. In this way, the force detection sensor 80 is capable of being disposed in one small space and of detecting torsion of the left bar 71 with respect to the frame 50 and torsion of the right bar 72 with respect to the frame 50.

The bracket 85 may further include a connection portion 855 connecting the first coupling portion 851 and the second coupling portion 852. The first coupling portion 851, the second coupling portion 852, and the connection portion 855 may be integrally formed.

One of the first coupling portion 851 and the second coupling portion 852 may extend upwards from the connection portion 855, and the other one of the first coupling portion 851 and the second coupling portion 852 may extend downwards from the connection portion 855.

The first coupling portion 851 may extend from the right end of the connection portion 855 in one of the upward direction and the downward direction, and the second coupling portion 852 may extend from the left end of the connection portion 855 in the other one of the upward direction and the downward direction. For example, as shown in FIG. 5, the first coupling portion 851 may extend upwards from the connection portion 855 and the second coupling portion 852 may extend downwards from the connection portion 855. Conversely, the first coupling portion 851 may extend downwards from the connection portion 855 and the second coupling portion 852 may extend upwards from the connection portion 855.

The forward, backward, leftward, rightward, upward and downward directions are defined as indicated by the arrows in FIG. 1. FIG. 5 shows the force detection sensor 80 when viewed from the front to the rear. Thus, the leftward and rightward directions shown in FIG. 5 are opposite those shown in FIG. 1. Describing the shape of the bracket 85 by way of example, the first coupling portion 851 is illustrated as extending upwards from the right side of the connection portion 855.

One of the first sensor unit 81 and the second sensor unit 82 may be disposed above the other. In the case in which the first coupling portion 851 extends upwards from the connection portion 855 and the second coupling portion 852 extends downwards from the connection portion 855, the first sensor unit 81 may be disposed above the second sensor unit 82. Further, the first sensor unit 81 may be located above the connection portion 855, and the second sensor unit 82 may be located below the connection portion 855. Conversely, the first coupling portion 851 may extend downwards from the connection portion 855, and the first sensor unit 81 may be located below the second sensor unit 82. Hereinafter, the case in which the first sensor unit 81 is located at the upper side will be described by way of example for convenience of description.

The first sensor unit 81 may extend from the first coupling portion 851 toward the left bar 71, and the second sensor unit 82 may extend from the second coupling portion 852 toward the right bar 72. The first sensor unit 81 may be spaced apart from the connection portion 855 in the upward direction, and the second sensor unit 82 may be spaced apart from the connection portion 855 in the downward direction.

The first sensor unit 81 and the second sensor unit 82 may be disposed parallel to each other.

As shown in the drawings, the connection portion 855 may be disposed parallel to the first sensor unit 81 and the second sensor unit 82. Thus, the force detection sensor 80 may have a " 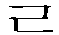 " shape or a reverse " 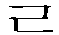 " shape.

Alternatively, unlike what is shown in the drawings, the first sensor unit 81 and the second sensor unit 82 may be disposed parallel to each other, and the connection portion 855 may extend from the first coupling portion 851 to the second coupling portion 852 so as not to be parallel to the first and second sensor units 81 and 82. That is, the bracket 85 may be formed in a straight line shape such that one end portion thereof serves as the first coupling portion 851 and the opposite end portion thereof serves as the second coupling portion 852, the first sensor unit 81 may be coupled to the right upper end of the first coupling portion 851, and the second sensor unit 82 may be coupled to the left lower end of the second coupling portion 852. Thus, the force detection sensor 80 may have a "Z" shape or a reverse "Z" shape.

The first sensor unit 81 and the second sensor unit 82 may have the same shape, and may be arranged in a point-symmetrical manner with respect to the center of the bracket 85. The bracket 85 may have a point-symmetrical shape about the center thereof.

The force detection sensor 80 is coupled to the frame 50, and the first sensor unit 81 and the second sensor unit 82 are spaced apart from the frame 50. At least the distal ends of the first sensor unit 81 and the second sensor unit 82, which are oriented toward the handle 70, are spaced apart from the frame 50. Due to this structure, the force detection sensor 80 is capable of detecting torsion of the handle 70 with respect to the frame 50.

Referring to FIG. 5(b), the bracket 85 may protrude further forwards than the first sensor unit 81 and the second sensor unit 82. The first sensor unit 81 and the second sensor unit 82 may be coupled to the rear surface of the bracket 85 so as to be in contact therewith, and the front surface of the bracket 85 may be coupled to the frame 50. The first sensor unit 81 and the second sensor unit 82 may be spaced apart from the frame 50 by the thickness of the bracket 85.

Alternatively, unlike what is shown in the drawings, only the parts of the bracket 85 that are coupled to the frame, i.e. only the first coupling portion 851 and the second coupling portion 852, may protrude further forwards than the first sensor unit 81 and the second sensor unit 82.

Alternatively, unlike the above configurations, the bracket 85 may not protrude further forwards than the first sensor unit 81 or the second sensor unit 82, and a spacer (not shown) may be disposed between the bracket 85 and the frame 50, so the force detection sensor 80 and the frame 50 may be spaced apart from each other.

Referring to FIG. 5, the force detection sensor 80 may have a plurality of fastening holes 81a, 82a, 851a and 852a formed therein. The bracket 85 may be fixedly coupled to the frame 50 in a manner such that fastening members (not shown) penetrate the fastening holes 851a and 852a formed in the bracket 85 and are then inserted into the frame 50.

The frame 50 may have a force detection sensor hole 55 formed in the upper portion thereof, and the bracket 85 may be engaged with the front surface of the force detection sensor hole 55.

The above-mentioned fastening holes 851a and 852a may be formed in the first coupling portion 851 and the second coupling portion 852 so as to engage the first and second sensor units 81 and 82, the bracket 85, and the frame 50 together.

The force detection sensor 80 may have fastening holes 81a and 82a formed therein so as to be engaged with the bridge 90. The fastening hole 81a may be formed in the left portion of the first sensor unit 81, and the fastening hole 82a may be formed in the right portion of the second sensor unit 82.

The stress distribution of the force detection sensor 80 varies depending on the case in which force is not applied to the handle 70, the case in which force is applied to both sides of the handle 70, and the case in which force is applied to either side of the handle 70. Accordingly, it is possible to detect torsion of the handle 70 with respect to the frame 50 and the magnitude and direction of force applied to the handle 70 using an electrical signal, such as the variable resistance value from the strain gauge.

When a user does not apply force to the handle 70, the handle 70 and the force detection sensor 80 are not twisted, and stress is evenly distributed.

In order to move the stroller straight forwards, the user may apply force to the left portion and the right portion of the third grip 730 in the forward direction. Because the handle 70 is connected to the frame 50, the first grip 710 and the second grip 720 are deformed such that the radii of curvature thereof decrease, and stress is concentrated due to the deformation. Further, the portions of the left bar 71 and the right bar 72 that are connected to the first grip 710 and the second grip 720 are inclined forwards. That is, the handle 70 is twisted with respect to the frame 50. More specifically, the left bar 71 and the right bar 72 are twisted forwards with respect to the frame 50.

The left bar 71 and the right bar 72 are twisted forwards with respect to the frame 50, the portions of the first sensor unit 81 and the second sensor unit 82 that are engaged with the first bridge 91 and the second bridge 92 are twisted so as to be oriented forwards, and stress is concentrated on the middle portions of the first sensor unit 81 and the second sensor unit 82 in the leftward-rightward direction and on the rear portions thereof.

In order to move the stroller backwards, the user may apply force to the left portion and the right portion of the third grip 730 in the backward direction. In this case, stress is concentrated on the middle portions of the first sensor unit 81 and the second sensor unit 82 in the leftward-rightward direction and on the front portions thereof. Thus, when force is applied to both sides of the handle 70, the force detection sensor 80 is capable of determining whether force is applied to the handle 70 in the forward direction or the backward direction.

In order to turn the stroller to the left or the right or to drive the stroller on a bumpy surface, the user may apply force to the left portion or the right portion of the handle 70. In this case, one of the left bar 71 and the right bar 72 is twisted forwards with respect to the frame 50, and the other one thereof is twisted backwards with respect to the frame 50. For example, when the user applies force to the right portion of the handle 70 in the forward direction in order to turn the stroller to the right, the right bar 72 may be twisted forwards with respect to the frame 50, and the left bar 71 may be twisted backwards with respect to the frame 50, or may be twisted forwards to a smaller angle than the right bar 72.

When the user applies force to the right portion of the handle 70 in the forward direction, the stress of the second sensor unit 82 is concentrated on the portion thereof that is adjacent to the bridge 90, unlike the first sensor unit 81.

FIG. 6 is a block diagram showing the control relationship between main components of a stroller according to an embodiment of the present invention.

Referring to FIG. 6, a stroller according to an embodiment of the present invention may include a first driving wheel 21 located on the left side, a second driving wheel 22 located on the right side, a first motor 31 configured to rotate the first driving wheel 21, a second motor 32 configured to rotate the second driving wheel 22, and a controller 200 configured to control the overall operation of the stroller. The controller 200 may control the first and second motors 31 and 32 to rotate the first and second driving wheels 21 and 22 in a desired direction and at a desired speed.

In addition, the stroller according to the embodiment of the present invention may include a sensor unit 610, which includes sensors for detecting various data related to the operation and state of the stroller.

For example, the sensor unit 610 may include a force detection sensor 80, which detects the force and torsion applied to the handle 70, and a dynamic tilt sensor (not shown), which detects the tilt of the stroller.

As described above with reference to FIGs. 1 to 5, the force detection sensor 80 may detect the force and torsion applied to the handle 70. The controller 200 may determine a user's manipulation intention based on data detected by the force detection sensor 80, and may control the first and second motors 31 and 32 according to the determined manipulation intention.

In the stroller according to the embodiment of the present invention, at least one of the driving wheels 20 is rotated by the motor 30, so it is possible to reduce the force with which a user pushes the stroller. To this end, the force applied to the handle 70 of the stroller may be measured by the force detection sensor 80, and the torque of the motor 30 may be increased so that the force is reduced by a certain amount.

The embodiment of the present invention is capable of accurately measuring the force and torsion applied to the handle 70 of the stroller using one force detection sensor 80 and of accurately driving the motor 30 based on the measured force and torsion.

In some embodiments, the controller 200 may determine whether the handle 70 is grasped by the user using the force detection sensor 80. Alternatively, the sensor unit 610 may further include a touch sensor for detecting whether the handle 70 is grasped by the user.

The dynamic tilt sensor is configured to detect the tilt of the stroller and the state of the ground surface. The dynamic tilt sensor may be implemented as a well-known sensor capable of detecting variation in tilt, such as, for example, a gyro sensor, an acceleration sensor, and a geomagnetic sensor.

The dynamic tilt sensor may be disposed on the body 10, the caster 40, or the driving wheel 20. In some cases, a plurality of dynamic tilt sensors may be provided, and may be disposed at a plurality of positions.

The controller 200 may determine whether the current location is a slope or flat ground based on data detected by the dynamic tilt sensor. In addition, the controller 200 may control the first and second motors 31 and 32 in different ways depending on whether the current location is flat ground or a slope, and may control a braking system.

The controller 200 may control the rotation of the wheels 20 during an automatic braking operation according to information on the tilt (uphill or downhill) obtained based on data detected by the dynamic tilt sensor.

The embodiment of the present invention is capable of determining the state of a corresponding ground surface by patterning data that was measured by the dynamic tilt sensor in the upward, downward, leftward and rightward directions. Upon recognizing a large amount of shake in the upward-downward direction while monitoring data detected by the dynamic tilt sensor, the controller 200 may determine that the ground surface is bumpy, and may control the rotation of the wheels 20 accordingly.

The sensor unit 610 may include a wheel sensor (not shown), which detects rotation of the driving wheels 20 and/or the motor 30. The wheel sensor is connected to the driving wheels 20 to detect the number of rotations of the wheels. Here, the wheel sensor may be a rotary encoder. Alternatively, the wheel sensor may include an encoder, which is connected to the motor 30 and detects the position of the rotor of the motor 30, a hall sensor, and a resolver.

The controller 200 may control the first and second motors 31 and 32 based on data detected by the wheel sensor to rotate the first and second driving wheels 21 and 22 in a desired direction and at a desired speed.

In addition, the controller 200 may control the force detection sensor 80 and other sensors included in the sensor unit 610 to perform calibration.

In addition, the stroller according to the embodiment of the present invention may include a power supply unit 630, which includes a rechargeable battery 300 to supply power to electronic parts of the stroller. The power supply unit 630 may supply driving power and operation power to each of the components of the stroller, and may be charged by receiving power from a charging station (not shown) when the remaining power is insufficient.

The stroller according to the embodiment of the present invention may include a storage unit 620 for recording a variety of pieces of information necessary for control. The storage unit 620 may include one or more volatile or nonvolatile recording media.

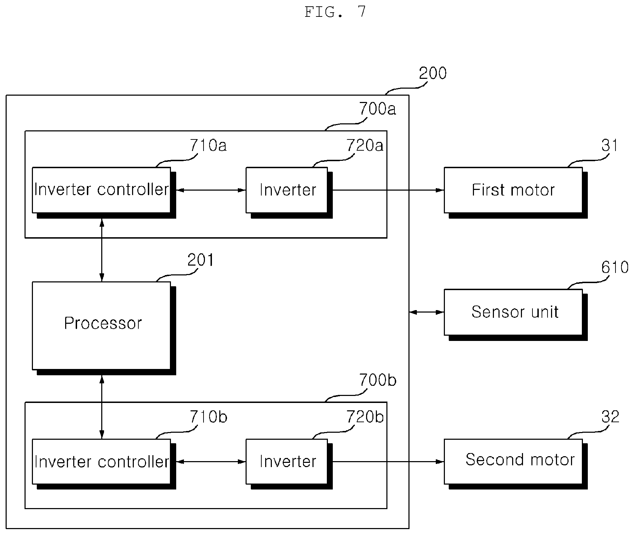

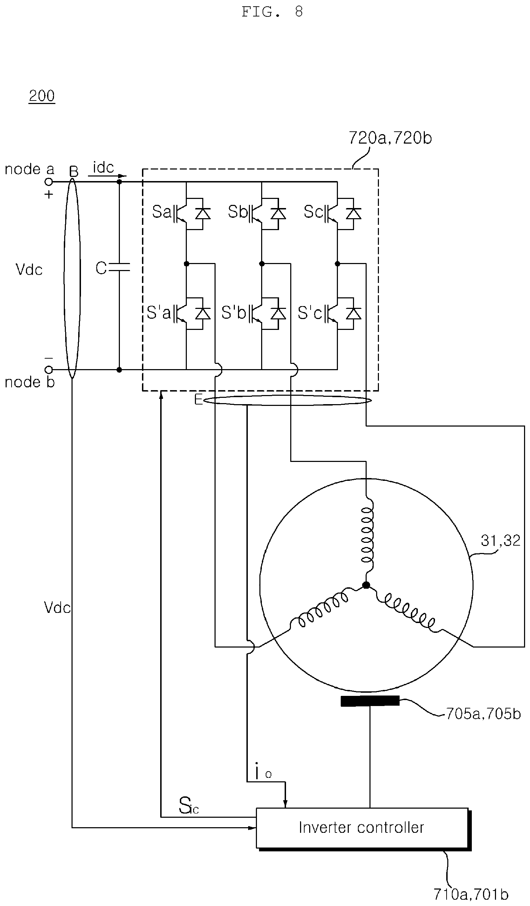

FIG. 7 is a schematic internal block diagram of the controller according to an embodiment of the present invention, and FIG. 8 is an exemplary internal circuit diagram of the motor-driving unit shown in FIG. 7.

Referring to FIGs. 7 and 8, the controller 200 may include motor-driving units 700a and 700b for driving the motors 31 and 32 and a processor 201 for controlling the motor-driving units 700a and 700b and the sensor unit 610.

The motor-driving units 700a and 700b, which are driving units for driving the motors 31 and 32, may be referred to as motor-driving devices. The first motor-driving unit 700a may drive the first motor 31, and the second motor-driving unit 700b may drive the second motor 32.

The motor-driving units 700a and 700b according to an embodiment of the present invention may include inverters 720a and 720b, which have a plurality of switching elements and output alternating-current (AC) power to the motors 31 and 32, output current detectors E, which detect output current io flowing through the motors 31 and 32, and inverter controllers 710a and 710b, which output switching control signals to the inverters 720a and 720b based on a torque command value T* and current information id and iq, acquired based on the output current io detected by the output current detectors E.

Further, the inverter controllers 710a and 710b may receive current command values i*d and i*q from the processor 201 as well as the torque command value T* and the current information id and iq acquired based on the output current io. The inverter controllers 710a and 710b may output switching control signals to the inverters 720a and 720b based on the received current command values.

Referring to the drawings, the motor-driving units 700a and 700b according to the embodiment of the present invention, which are driving devices for driving the motors 31 and 32, may include inverters 720a and 720b, which have a plurality of switching elements Sa to Sc and S'a to S'c and output AC power to the motors 31 and 32, and inverter controllers 710a and 710b, which control the inverters 720a and 720b.

In addition, the motor-driving units 700a and 700b according to the embodiment of the present invention may further include capacitors C, which store DC terminal voltage Vdc corresponding to the input terminals of the inverters 720a and 720b, DC terminal voltage detectors B, which detect the DC terminal voltage Vdc, and output current detectors E, which detect output current flowing through the motors 31 and 32.

The motors 31 and 32 according to the embodiment of the present invention may be three-phase motors, which are driven by the inverters 720a and 720b. Each of the three-phase motors 31 and 32 includes a stator and a rotor, and AC power of each phase, which has a predetermined frequency, is applied to the coil of the stator of each of the phases a, b and c to rotate the rotor. Each of the motors 31 and 32 may be implemented as any one of various types of motors, such as, for example, an induction motor, a brushless DC (BLDC) motor, and a reluctance motor.

The inverter controllers 710a and 710b may output switching control signals Sic to the inverters 720a and 720b based on the current command values i*d and i*q corresponding to the calculated torque.

The inverter controllers 710a and 710b according to an embodiment of the present invention calculate current information id and iq and a torque command value T* in real time, calculate a current command value i*d and i*q based on the torque command value T*, and drive the motors 31 and 32 using the current command values i*d and i*q. Accordingly, highefficiency driving is achieved more accurately.

In addition, the motor-driving units 700a and 700b may further include capacitors C, which store DC terminal voltage Vdc corresponding to the input terminals of the inverters 720a and 720b, and DC terminal voltage detectors B, which detect the DC terminal voltage Vdc.

The inverter controllers 710a and 710b calculate current command values i*d and i*q based on the current information id and iq, the torque command value T*, and the detected DC terminal voltage Vdc, and drive the motors 31 and 32 using the current command values i*d and i*q. Accordingly, highefficiency driving is achieved more accurately.

Referring to FIGs. 3 and 4, the motor-driving units 700a and 700b according to the embodiment of the present invention may include inverters 720a and 720b, inverter controllers 710a and 710b, output current detectors E, and DC terminal voltage detectors B.

The DC terminal capacitor C stores input power. Although the DC terminal capacitor C is illustrated in the drawings as being singular in number, it may be plural in number in order to secure stability of the device.

The input power supplied to the DC terminal capacitor C may be power stored in the battery 300 or power, the level of which has been converted by a converter (not shown).

Since DC power is stored therein, the two ends of the DC terminal capacitor C may be referred to as DC terminals or DC link terminals.

The DC terminal voltage detector B may detect the DC terminal voltage Vdc at both ends of the DC terminal capacitor C. To this end, the DC terminal voltage detector B may include a resistance element and an amplifier. The detected DC terminal voltage Vdc may be input to the inverter controllers 710a and 710b as a discrete signal having the form of a pulse.

The inverters 720a and 720b may include a plurality of inverter-switching elements Sa to Sc and S'a to S'c. The inverters 720a and 720b may convert the DC power Vdc into three phases of AC power Va, Vb and Vc having a predetermined frequency through on/off operation of the switching elements Sa to Sc and S'a to S'c, and may output the three phases of AC power to the three-phase synchronous motors 31 and 32.

Each of the inverters 720a and 720b includes upper arm switching elements Sa, Sb and Sc and lower arm switching elements S'a, S'b and S'c. Each upper arm switching element and a corresponding lower arm switching element are connected in series to form a pair, and a total of three pairs of upper and lower arm switching elements Sa&S'a, Sb&S'b and Sc&S'c are connected in parallel. A diode is connected to each of the switching elements Sa, S'a, Sb, S'b, Sc and S'c in an antiparallel manner.

The switching elements of the inverters 720a and 720b perform on/off operation based on inverter-switching control signals Sic from the inverter controllers 710a and 710b. Thus, three-phase AC power having a predetermined frequency is output to the three-phase synchronous motors 31 and 32.

The motor-driving units 700a and 700b according to an embodiment of the present invention may include position detection sensors 705a and 705b.

The inverter controller 430 may receive the detected output current io from the output current detector E, and may receive information about the positions θ of the rotors of the motors 31 and 32 from the position detection sensors 705a and 705b.

The position detection sensors 705a and 705b may detect the positions θ of the magnetic poles of the rotors of the motors 31 and 32. That is, the position detection sensors 705a and 705b may detect the positions of the rotors of the motors 31 and 32. To this end, the position detection sensors 705a and 705b may include wheel sensors, such as an encoder or a resolver.

In some embodiments, the inverter controllers 710a and 710b may control the switching operation of the inverters 720a and 720b in a sensorless manner.

To this end, the inverter controllers 710a and 710b may receive output current io detected by the output current detector E.

The inverter controllers 710a and 710b may output inverter-switching control signals Sic to respective gate terminals of the inverters 720a and 720b in order to control the switching operation of the inverters 720a and 720b. Accordingly, the inverter-switching control signal Sic may be referred to as a gate-driving signal.

The inverter-switching control signal Sic is a pulse width modulation (PWM) switching control signal, and is generated and output based on the output current io detected by the output current detector E.

The output current detector E detects the output current io flowing between the inverters 720a and 720b and the three-phase motors 31 and 32. That is, the output current detector E may detect the current flowing through the motors 31 and 32.

The output current detector E may detect all of the output currents ia, ib and ic of respective phases, or may detect the output currents of two phases using three-phase equilibrium.

The output current detector E may be located between the inverters 720a and 720b and the motors 31 and 32, and a current transformer (CT) or a shunt resistor may be used to detect the current.

The detected output current io, which is a discrete signal having the form of a pulse, may be applied to the inverter controllers 710a and 710b, and a switching control signal Sic may be generated based on the detected output current io.

As described above with reference to FIGs. 1 to 8, the stroller according to an embodiment of the present invention may include a body 10, a pair of driving wheels 20 mounted to the left and right sides of the body 10, a motor 30 configured to rotate the pair of driving wheels 20, a frame 50 connected to the body 10 and extending upwards, a handle 70 connected to the frame 50, a sensor unit 610, which includes a tilt sensor configured to detect the tilt of the body 10 and a touch sensor configured to detect whether the handle 70 is grasped, and a controller 200, which determines whether the current location is a slope based on data detected by the tilt sensor upon determining that the user has taken the hands off the handle 70 based on data detected by the touch sensor, sets a control parameter of the motor 30 depending on whether the current location is a slope, and performs a braking operation in different ways depending on whether the motor 30 is rotating.

The controller 200 may control the overall operation of the stroller, such as the operation of the motor 30, based on data detected by the sensor unit 610.

For example, the controller 200 may control the first motor 31 and the second motor 32 based on force and torsion detected by the force detection sensor 80 so as to provide power for moving the stroller forwards or backwards.

In addition, the controller 200 may drive the first motor 31 or the second motor 32, or may control the speed of the first motor 31 and the speed of the second motor 32 to be different from each other based on force and torsion detected by the force detection sensor 80 so as to provide power for turning the stroller to the left or the right.

The stroller according to an embodiment of the present invention may measure force and torsion transmitted from the handle 70 to the main body (including the frame 50 and the body 10) using one force detection sensor 80, which is provided in the middle of the handle 70 and is capable of measuring two types of force, and may adjust the driving torques of the first and second motors 31 and 32 according to the measured force and torsion.

The controller 200 may control the current supplied to the first and second motors 31 and 32 in proportion to the magnitudes of the force and torsion detected by the force detection sensor 80 to control the torques of the first and second motors 31 and 32.

In addition, according to the embodiments of the present invention, the sensor unit 610 may detect whether the user's hands are placed on the handle 70. That is, the sensor unit 610 may detect whether the user is grasping the handle 70 with the hands. For example, it is possible to detect whether the handle 70 is grasped by the user using the force detection sensor 80 or the touch sensor.

Upon determining that no hands are grasping the handle 70, the controller 200 may operate the braking system so that the driving wheels 20 are stopped.

In this case, the controller 200 may operate the braking system in different ways depending on whether the stroller is currently located on flat ground or on a slope. In particular, the controller 200 may set the setting parameter of the braking system to an optimal value depending on whether the stroller is currently located on flat ground or on a slope.

The stroller must not be driven unless it is operated by a user such as a parent. To this end, it is required to determine the intention of a user, such as a parent, and to change the method of controlling the brake depending on the environment in which the stroller is driven. In addition, it is required to enable control for smooth deceleration in the deceleration section.

The stroller according to an embodiment of the present invention may set a parameter for control of the brake depending on the driving environment. Accordingly, it is possible to minimize vibration, to determine the tilt of the stroller, and to change the brake-driving method depending on the determined tilt, thereby more smoothly decelerating and stopping the stroller, thus further ensuring the safety of a baby in the stroller.

For example, upon determining that the stroller is located on a slope, the controller 200 may reduce an integral control constant I and a derivative control constant D, among proportional-integral-derivative (PID) control constants of the motor 30, below a set value for flat ground.

PID control, which is one of the representative feedback control methods, measures an output value, and calculates a control value using the difference between the output value and the set value and respective control constants.

The proportional control constant P gives a control value that is proportional to the size of the error value in the current state. Depending on the size of the proportional control constant P, it is possible to quickly decelerate and stop the stroller.

The integral control constant I gives a control value that is proportional to the error accumulation value in order to reduce the error. However, this is disadvantageous from the aspect of speed. In order to compensate for the disadvantage of the integral control from the aspect of speed, the derivative control constant D in the derivative control enables the target value to be quickly reached.

If the wheels 20 are not braked on a slope, a very dangerous situation in which the stroller travels down the slope may occur. Therefore, the controller 200 may control the stroller to rapidly decelerate and stop by adjusting the proportional control constant P.

As the sizes of the integral control constant I and the derivative control constant D are increased, the target value can be reached more quickly. In this case, however, the integral and derivative control takes effect quickly, resulting in overshooting and vibration. Therefore, when the stroller is located on a slope, the controller 200 may reduce the integral control constant I and the derivative control constant D below the set value for flat ground, thereby suppressing overshooting and vibration.

If the brake is driven in the same manner, regardless of the tilt, the stroller may not be stopped smoothly. Therefore, it is required to change the brake-driving method depending on the tilt. For example, it is possible to stop the stroller more smoothly by changing the parameter depending on the tilt. Therefore, parameters may be set differently for specific tilts. For example, the degree of change in the control constant may be adjusted in proportion to the tilt.

In some embodiments, upon determining that the stroller is located on a slope, the controller 200 may perform proportional (P) control on the motor 30. Upon determining that the stroller is located on flat ground, the controller 200 may perform proportional-integral-derivative (PID) control on the motor 30. That is, the braking system is driven under PID control on flat ground, and is driven under P control on a slope, thereby suppressing overshooting and vibration.

Accordingly, it is possible to suppress overshooting and vibration while realizing rapid deceleration and stoppage of the stroller depending on the situation.

In addition, since the motor 30 is disposed at the rear wheels, when the stroller according to an embodiment of the present invention is driven in an unintended direction, it is possible to rapidly stop the stroller by driving the motor 30 in a direction opposite the direction in which the stroller is moving.

That is, if the wheels 20 roll in a certain direction in the situation in which the stroller needs to stop, the motor 30 is rotated in a direction opposite the direction in which the wheels 20 roll, thereby rapidly decelerating and stopping the stroller.

On the other hand, upon determining that the stroller is located on flat ground and the motor 30 and/or the wheels 20 are not rotating, the controller 200 may stop applying current to the motor 30. On flat ground, it is possible to stop the stroller more rapidly when stopping the application of current than when stopping the stroller manually, and it is also possible to reduce power consumption.

However, it is impossible to perform control in the deceleration section at the time of stopping the application of current to each phase of the motor 30. Further, if the control method is not changed depending on the tilt (i.e. flat ground or a slope), the stroller is not capable of being stopped smoothly.

According to an embodiment of the present invention, upon determining that the stroller is located on flat ground and the motor 30 and/or the wheels 20 are rotating, the controller 200 may perform a braking operation by controlling the motor 30 to rotate in a direction opposite the direction in which the motor 30 and/or the wheels 20 are rotating. That is, the controller 200 may rotate the motor 30 in the opposite direction so as to hinder the rotation of the motor 30 and/or the wheels 20, thereby enabling the stroller to stop more rapidly.

Further, upon determining that the stroller is located on a slope and the motor 30 and/or the wheels 20 are rotating, the controller 200 may perform a braking operation by controlling the motor 30 to rotate in a direction opposite the direction in which the motor 30 and/or the wheels 20 are rotating. In this case, the controller 200 may rotate the motor 30 in the opposite direction so as to hinder the rotation of the motor 30 and/or the wheels 20 in consideration of the tilt as well as the rotating speed of the motor 30 and/or the wheels 20, thereby enabling the stroller to stop more rapidly.

For example, the controller 200 may adjust the reverse rotational speed of the motor 30 with respect to the rotating direction of the motor 30 and/or the wheels 20 based on the tilt of the slope.

In some embodiments, upon determining that the tilt of the slope is greater than or equal to a threshold tilt value, the controller 200 brakes the wheels 20. Alternatively, it may also be possible to provide other driving modes to a user who does not want the stroller to be forcibly stopped simply because it is located on a slope.

Further, overshooting and vibration may be prevented using a parameter that is different from that for flat ground.

On the other hand, upon determining that the stroller is located on a slope and the motor 30 and/or the wheels 20 are not rotating, the controller 200 may maintain the application of current to the motor 30. If the application of current to the motor 30 is interrupted on a slope, the stroller rolls down the slope. Therefore, it is possible to maintain the stopped state of the stroller on a slope by continuously supplying current in an amount required to maintain the stopped state of the stroller to the motor 30.

The stroller according to an embodiment of the present invention may further include an output current detector E for detecting an output current output to the motor 30, and the controller 200 may determine the rotation of the motor 30 based on the detected output current.

That is, the inverter controllers 710a and 710b may estimate the rotation of the motor 30 in a sensorless manner, and may control the switching operation of the inverters 720a and 720b. To this end, the inverter controllers 710a and 710b may receive the output current io detected by the output current detector E.

More preferably, the sensor unit 610 may further include position detection sensors 705a and 705b for detecting rotation of the motor 30. The position detection sensors 705a and 705b may detect the positions of the rotors of the motors 31 and 32. To this end, each of the position detection sensors 705a and 705b may include a wheel sensor such as an encoder or a resolver.

According to an embodiment of the present invention, the user's intention to manipulate the stroller may be determined based on whether the handle 70 is grasped by the user. To this end, the stroller may determine whether the user intends to drive the stroller using the force detection sensor 80 or the touch sensor.

In addition, according to an embodiment of the present invention, an encoder or a hall sensor for detecting whether the wheels are rotating may be used in order to determine whether to operate the brake. Using this sensor, it is possible to determine whether the motor 30 is rotating and the direction of rotation of the motor 30.

According to an embodiment of the present invention, the brake is not controlled by manual operation by the user, but the controller 200 checks the traveling state of the stroller in real time and provides an optimal solution, thereby enabling more convenient and safe control of the brake. In addition, the controller 200 suppresses vibration when the braking system is operated, thereby protecting a baby in the stroller from the same.

Hereinafter, operation methods related to control of the braking system according to embodiments of the present invention will be described in detail with reference to the drawings.

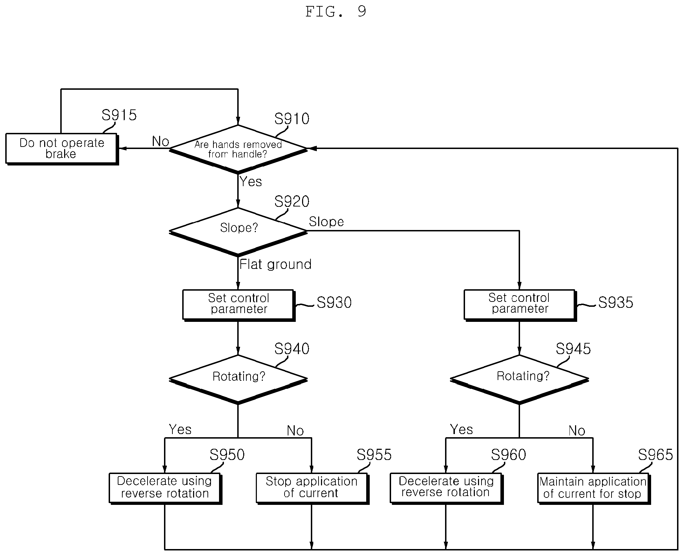

FIG. 9 is a flowchart showing an operation method of the stroller according to an embodiment of the present invention.

Referring to FIG. 9, the stroller according to an embodiment of the present invention may detect whether the user has taken the hands off the handle 70 (S910). For example, the controller 200 may determine whether the handle 70 is grasped by the user based on data detected by the force detection sensor 80 or the touch sensor (S910).

When the user's hands are touching the handle 70 (S910), it is determined that the user is driving the stroller, so the braking system does not operate (S915). That is, when the user grasps the handle 70 with the hands and manipulates the same (S910), the braking system does not operate (S915).

When the user's hands are removed from the handle 70 (S910), it is determined that the user is not driving the stroller. Accordingly, when the user's hands are removed from the handle 70 (S910), the controller 200 may drive the braking system in order to prevent the occurrence of an accident.

The stroller according to an embodiment of the present invention may determine whether the stroller is located on flat ground or on a slope (S920). For example, the controller 200 may determine whether the current location of the stroller is flat ground or a slope based on data detected by the tilt sensor, which is constituted by one or more sensors capable of detecting variation in tilt, such as, for example, a gyro sensor, an acceleration sensor, and a geomagnetic sensor (S920).

The controller 200 may set a control parameter suitable for the determined traveling environment (S930 and S935). Upon determining that the stroller is on flat ground, the controller 200 may set a control parameter suitable for flat ground (S930). In addition, upon determining that the stroller is on a slope, the controller 200 may set a control parameter suitable for the slope (S935). In some embodiments, the controller 200 may adjust the control parameter depending on the tilt of the slope.

For example, upon determining that the stroller is located on a slope, the controller 200 may set the integral control constant I and the derivative control constant D to 0 to perform proportional (P) control on the motor 30 (S935). Upon determining that the stroller is located on flat ground, the controller 200 may perform proportional-integral-derivative (PID) control on the motor 30 (S930) . In some embodiments, the control constants may be set differently depending on the tilt.

According to an embodiment of the present invention, the braking system is driven under PID control on flat ground, and is driven under P control on a slope, thereby suppressing overshooting and vibration. Accordingly, it is possible to suppress overshooting and vibration while realizing rapid deceleration and stoppage of the stroller depending on the situation.

According to an embodiment of the present invention, upon determining that the stroller is located on a slope, the controller 200 may reduce the integral control constant I and the derivative control constant D, among the proportional-integral-derivative (PID) control constants of the motor 30, below a set value for flat ground (S935). That is, the control parameter may be set to a relatively large value on flat ground (S930), and may be set to a relatively small value on a slope (S935).

The controller 200 may control the stroller to rapidly decelerate and stop by adjusting the proportional control constant P. When the stroller is located on a slope, the controller 200 may reduce the integral control constant I and the derivative control constant D below the set value for flat ground, thereby suppressing overshooting and vibration.

According to an embodiment of the present invention, it is possible to stop the stroller more smoothly by changing parameters in consideration of tilt. Therefore, parameters may be set differently for specific tilts.

After setting the control parameter (S930 and S935), the controller 200 may determine whether the driving wheels 20 and the motor 30 are rotating (S940 and S945), and may perform braking system control suitable for the situation.

After setting the control parameter to a value for flat ground (S930), upon determining that the motor 30 and/or the wheels 20 are rotating (S940), the controller 200 may perform a braking operation by controlling the motor 30 to rotate in a direction opposite the direction in which the motor 30 and/or the wheels 20 are rotating. That is, the controller 200 may rotate the motor 30 in the opposite direction so as to hinder the rotation of the motor 30 and/or the wheels 20, thereby enabling the stroller to stop more rapidly.

After setting the control parameter to a value for flat ground (S930), upon determining that the motor 30 and/or the wheels 20 are not rotating (S940), the controller 200 may stop applying current to the motor 30 (S955). On flat ground, it is possible to stop the stroller more rapidly when stopping the application of current than when stopping the stroller manually, and it is also possible to reduce power consumption.

After setting the control parameter to a value for a slope (S935), upon determining that the motor 30 and/or the wheels 20 are rotating (S945), the controller 200 may perform a braking operation by controlling the motor 30 to rotate in a direction opposite the direction in which the motor 30 and/or the wheels 20 are rotating (S960). In this case, the controller 200 may rotate the motor 30 in the opposite direction so as to hinder the rotation of the motor 30 and/or the wheels 20 considering the tilt as well as the rotating speed of the motor 30 and/or the wheels 20, thereby enabling the stroller to stop more rapidly. Further, overshooting and vibration may be suppressed using a parameter that is different from that for flat ground.

After setting the control parameter to a value for a slope (S935), upon determining that the motor 30 and/or the wheels 20 are not rotating (S945), the controller 200 may maintain the application of current to the motor 30 (S965). Therefore, it is possible to maintain the stopped state of the stroller on a slope by continuously supplying current in an amount required to maintain the stopped state of the stroller to the motor 30.

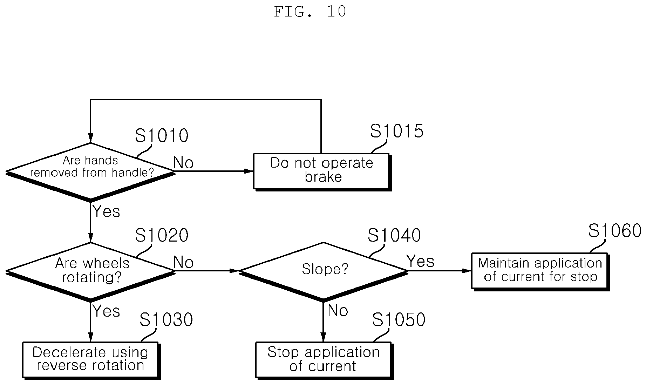

FIG. 10 is a flowchart showing an operation method of the stroller according to an embodiment of the present invention.

Referring to FIG. 10, the stroller according to an embodiment of the present invention may detect whether the user has taken the hands off the handle 70 based on data detected by the force detection sensor 80 or the touch sensor (S1010).

When the user's hands are touching the handle 70 (S1010), it is determined that the user is moving the stroller, so the braking system does not operate (S1015). When the user's hands are removed from the handle 70 (S1010), the controller 200 may drive the braking system.

Accordingly, it is possible to enable a user to use the stroller more safely by controlling the operation of the stroller in a dangerous situation or an unintended situation.

The controller 200 may determine whether the driving wheels 20 are rotating based on data detected by the sensor unit 610, such as a wheel sensor (S1020).

Upon determining that the driving wheels 20 are rotating (S1020), the controller 200 may perform control for rapid deceleration using reverse rotation (S1030). For example, the controller 200 may control the motor 30 to rotate in a direction opposite the direction in which the driving wheels 20 are rotating.

Upon determining that the driving wheels 20 are not rotating (S1020), the controller 200 may determine whether the stroller is located on flat ground or on a slope based on data detected by the sensor unit 610, such as the touch sensor and the force detection sensor 80 (S1040).

Upon determining that the stroller is located on flat ground (S1040), the controller 200 may stop the application of current to the motor 30 (S1050), thereby reducing power consumption.

Upon determining that the stroller is located on a slope (S1040), the controller 200 may continuously supply current in an amount required to maintain the stopped state of the driving wheels 20 to the motor 30 (S1060), thereby enabling the stroller to be stably maintained in a stopped state on the slope.

The stroller and the operation method thereof according to the embodiments of the present invention are not limited to the configurations and methods of the embodiments described above, but all or part of the embodiments may be selectively combined so as to be modified into various forms.

The operation method of a stroller according to the embodiment of the present invention may be implemented as processor-readable code on a processor-readable recording medium. The processor-readable recording medium includes all kinds of recording devices in which data capable of being read by a processor is stored. The processor-readable recording medium can also be distributed in network-coupled computer systems so that the processor-readable code is stored and executed in a distributed fashion.

As is apparent from the above description, according to at least one of the embodiments of the present invention, it is possible to safely stop a cart using a brake-driving algorithm in a dangerous situation or an unintended situation.

In addition, according to at least one of the embodiments of the present invention, it is possible to stop a cart more reliably by recognizing a user intention and analyzing the traveling state of the cart.

In addition, according to at least one of the embodiments of the present invention, it is possible to stop a cart in an optimal way depending on whether the cart is traveling on flat ground or on a slope.

In addition, according to at least one of the embodiments of the present invention, a motor for rotating driving wheels and a force detection sensor for detecting torsion of a handle with respect to a frame are included, so it is possible to reduce the force with which a user moves a cart when the user moves the cart on a slope, when the ground surface is bumpy, and when the user turns the cart to the left or the right.

In addition, according to at least one of the embodiments of the present invention, the handle includes a left bar and a right bar, which are spaced apart from each other in a leftward-rightward direction at a position corresponding to the frame, and the force detection sensor, which detects the magnitude and direction of the force applied to the handle by a user, is mounted at one position in a manner of being connected to the left bar and the right bar and coupled to the frame, thereby increasing the freedom of design.

However, the effects achievable through the invention are not limited to the above-mentioned effects, and other effects not mentioned herein will be clearly understood by those skilled in the art from the above description.

## Claims

1. A cart, comprising:
a body (10) having driving wheels (20) mounted to left and right sides thereof;
a motor (30) for rotating the driving wheels (20);
a frame (50) comprising a lower part (51) connected to the body (10), the frame (50) extending upwards from the lower part (51) ;
a handle (70) connected to the frame (50);
a sensor unit (610) comprising a touch sensor configured to detect whether the handle (70) is grasped; and
a controller (200) configured to perform control such that a braking operation is performed in different ways depending on whether the motor (30) is rotating upon determining that the handle (70) is not grasped based on data detected by the touch sensor,
**characterized by**:
the sensor unit (610) comprising a tilt sensor configured to detect a tilt of the body (10), and
the controller (200) being configured
to determine whether the cart is located on a slope based on data detected by the tilt sensor upon determining that the handle (70) is not grasped based on data detected by the touch sensor, and
to change a control parameter of the motor (30) depending on whether the cart is located on a slope.

2. The cart according to claim 1, wherein the sensor unit (610) further comprises a position detection sensor (705a, 705b) configured to detect rotation of the motor (30).

3. The cart according to claim 1, or 2, further comprising:
an output current detector (E) configured to detect an output current output to the motor (30),
wherein the controller (200) is configured to determine rotation of the motor (30) based on the detected output current.

4. The cart according to claim 1, 2, or 3, wherein the controller (200) is configured to adjust a reverse rotational speed of the motor (30) with respect to a rotating direction of the motor (30) based on a tilt of the slope.

5. The cart according to any one of claims 1 to 4, wherein, upon determining that a tilt of the slope is greater than or equal to a threshold tilt value, the controller (200) is configured to brake the driving wheels (20).

6. The cart according to any one of claims 1 to 5, wherein, upon determining that the cart is located on a slope, the controller 200) is configured to reduce an integral control constant and a derivative control constant among proportional-integral-derivative (PID) control constants of the motor (30).

7. The cart according to any one of claims 1 to 5, wherein, upon determining that the cart is located on a slope, the controller 200) is configured to perform proportional (P) control on the motor (30), and
wherein, upon determining that the cart is located on flat ground, the controller 200) is configured to perform PID control on the motor (30).

8. The cart according to any one of claims 1 to 7, wherein, upon determining that the cart is located on flat ground and the motor (30) is rotating, the controller 200) is configured to perform a braking operation by controlling the motor (30) to rotate in a direction opposite a direction in which the motor (30) is rotating.

9. The cart according to any one of claims 1 to 8, wherein, upon determining that the cart is located on flat ground and the motor (30) is not rotating, the controller 200) is configured to stop applying current to the motor (30).

10. The cart according to any one of claims 1 to 9, wherein, upon determining that the cart is located on a slope and the motor (30) is rotating, the controller 200) is configured to perform a braking operation by controlling the motor (30) to reverse the direction of rotation.

11. The cart according to any one of claims 1 to 10, wherein, upon determining that the cart is located on a slope and the motor (30) is not rotating, the controller 200) is configured to maintain application of current to the motor (30).

12. The cart according to any one of claims 1 to 11, wherein the sensor unit (610) further comprises a force detection sensor (80) configured to detect force applied to the handle (70), and
wherein the controller 200) is configured to control the motor (30) based on data detected by the force detection sensor (80).

13. The cart according to claim 12, wherein the frame (50) is located in middle between the driving wheels (20) in a leftward-rightward direction,
wherein the handle (70) comprises a left bar (71) and a right bar (72), the left bar (71) and the right bar (72) being spaced apart from each other in the leftward-rightward direction at a position corresponding to the frame (50), and
wherein the force detection sensor (80) is connected to the left bar (71) and the right bar (72) and is coupled to the frame (50).

14. The cart according to claim 13, wherein the force detection sensor (80) comprises:
a first sensor unit (81) connected to the left bar (71);
a second sensor unit (82) connected to the right bar (72); and
a bracket (85) connecting the first sensor unit (81) and the second sensor unit (82), the bracket (85) being coupled to the frame (50).

15. The cart according to claim 12, wherein the driving wheels (20) comprise:
a first driving wheel (21) mounted to a left side of the body (10); and
a second driving wheel (22) mounted to a right side of the body (10),
wherein the motor (30) comprises:
a first motor (31) configured to rotate the first driving wheel (21); and
a second motor (32) configured to rotate the second driving wheel (22), and
wherein the controller 200) is configured to drive the first motor (31) and the second motor (32) based on magnitudes of force and torsion detected by the force detection sensor (80) .

## Patentansprüche

1. Wagen, aufweisend:
einen Körper (10), an dessen linker und rechter Seite Antriebsräder (20) angebracht sind;
einen Motor (30) zum Drehen der Antriebsräder (20);
einen Rahmen (50) mit einem unteren Teil (51), der mit dem Körper (10) verbunden ist, wobei sich der Rahmen (50) vom unteren Teil (51) nach oben erstreckt;
einen Griff (70), der mit dem Rahmen (50) verbunden ist;
eine Sensoreinheit (610), die einen Berührungssensor aufweist, der konfiguriert ist zu erkennen, ob der Griff (70) ergriffen wird; und
eine Steuerung (200), die so zum Durchführen der Steuerung konfiguriert ist, dass ein Bremsvorgang in Abhängigkeit davon, ob sich der Motor (30) dreht, auf unterschiedliche Weise durchgeführt wird, wenn sie basierend auf vom Berührungssensor erfassten Daten feststellt, dass der Griff (70) nicht gegriffen ist,
**gekennzeichnet dadurch, dass**:
die Sensoreinheit (610) einen Neigungssensor aufweist, der zum Erfassen einer Neigung des Körpers (10) konfiguriert ist, und
die Steuerung (200) so konfiguriert ist,
dass sie basierend auf vom Neigungssensor erfassten Daten feststellt, ob sich der Wagen an einem Hang befindet, wenn sie basierend auf vom Berührungssensor erfassten Daten feststellt, dass der Griff (70) nicht gegriffen ist, und
dass sie einen Steuerparameter des Motors (30) in Abhängigkeit davon ändert, ob sich der Wagen an einem Hang befindet.

2. Wagen nach Anspruch 1, wobei die Sensoreinheit (610) ferner einen Positionserfassungssensor (705a, 705b) aufweist, der zum Erfassen der Drehung des Motors (30) konfiguriert ist.

3. Wagen nach Anspruch 1 oder 2, ferner aufweisend:
einen Ausgangsstromdetektor (E), der zum Erfassen eines an den Motor (30) abgegebenen Ausgangsstroms konfiguriert ist,
wobei die Steuerung (200) so konfiguriert ist, dass sie die Drehung des Motors (30) basierend auf dem erfassten Ausgangsstrom bestimmt.

4. Wagen nach Anspruch 1, 2 oder 3, wobei die Steuerung (200) so konfiguriert ist, dass sie eine Rückwärtsdrehzahl des Motors (30) in Bezug auf eine Drehrichtung des Motors (30) basierend auf einer Neigung des Hangs einstellt.

5. Wagen nach einem der Ansprüche 1 bis 4, wobei die Steuerung (200) so konfiguriert ist, dass sie die Antriebsräder (20) bremst, wenn sie feststellt, dass eine Neigung des Hangs größer oder gleich einem Neigungsschwellenwert ist.

6. Wagen nach einem der Ansprüche 1 bis 5, wobei die Steuerung (200) so konfiguriert ist, dass sie bei der Feststellung, dass sich der Wagen an einem Hang befindet, eine integrale Steuerkonstante und eine derivative Steuerkonstante unter den PID-Steuerkonstanten (Proportional-Integral-Derivative) des Motors (30) reduziert.

7. Wagen nach einem der Ansprüche 1 bis 5, wobei die Steuerung (200) so konfiguriert ist, dass sie bei Feststellung, dass sich der Wagen an einem Hang befindet, eine proportionale Steuerung (P) des Motors (30) durchführt, und
wobei die Steuerung (200) so konfiguriert ist, dass sie bei Feststellung, dass sich der Wagen auf ebenem Boden befindet, eine PID-Steuerung für den Motor (30) durchführt.

8. Wagen nach einem der Ansprüche 1 bis 7, wobei die Steuerung (200) so konfiguriert ist, dass sie bei Feststellung, dass sich der Wagen auf ebenem Boden befindet und sich der Motor (30) dreht, einen Bremsvorgang durchführt, indem sie den Motor (30) so steuert, dass er sich in einer der Drehrichtung des Motors (30) entgegengesetzten Richtung dreht.

9. Wagen nach einem der Ansprüche 1 bis 8, wobei die Steuerung (200) so konfiguriert ist, dass sie bei Feststellung, dass sich der Wagen auf ebenem Boden befindet und sich der Motor (30) nicht dreht, die Stromzufuhr zum Motor (30) stoppt.

10. Wagen nach einem der Ansprüche 1 bis 9, wobei die Steuerung (200) so konfiguriert ist, dass sie bei Feststellung, dass sich der Wagen an einem Hang befindet und der Motor (30) sich dreht, einen Bremsvorgang durch Steuern des Motors (30) zur Umkehr der Drehrichtung durchführt.

11. Wagen nach einem der Ansprüche 1 bis 10, wobei die Steuerung (200) so konfiguriert ist, dass sie bei Feststellung, dass sich der Wagen an einem Hang befindet und sich der Motor (30) nicht dreht, die Stromzufuhr zum Motor (30) aufrechterhält.

12. Wagen nach einem der Ansprüche 1 bis 11, wobei die Sensoreinheit (610) ferner einen Krafterfassungssensor (80) aufweist, der zum Erfassen einer auf den Griff (70) ausgeübten Kraft konfiguriert ist, und
wobei die Steuerung (200) so konfiguriert ist, dass sie den Motor (30) basierend auf vom Krafterfassungssensor (80) erfassten Daten steuert.

13. Wagen nach Anspruch 12, wobei der Rahmen (50) in einer Links-Rechts-Richtung in der Mitte zwischen den Antriebsrädern (20) angeordnet ist,
wobei der Griff (70) eine linke Stange (71) und eine rechte Stange (72) aufweist, wobei die linke Stange (71) und die rechte Stange (72) in der Links-Rechts-Richtung an einer dem Rahmen (50) entsprechenden Position voneinander beabstandet sind, und
wobei der Krafterfassungssensor (80) mit der linken Stange (71) und der rechten Stange (72) verbunden und mit dem Rahmen (50) gekoppelt ist.

14. Wagen nach Anspruch 13, wobei der Krafterfassungssensor (80) aufweist:
eine erste Sensoreinheit (81), die mit der linken Stange (71) verbunden ist; eine zweite Sensoreinheit (82), die mit der rechten Stange (72) verbunden ist; und
eine Halterung (85), die die erste Sensoreinheit (81) und die zweite Sensoreinheit (82) verbindet, wobei die Halterung (85) mit dem Rahmen (50) gekoppelt ist.

15. Wagen nach Anspruch 12, wobei die Antriebsräder (20) aufweisen:
ein erstes Antriebsrad (21), das an einer linken Seite des Körpers (10) angebracht ist; und
ein zweites Antriebsrad (22), das an einer rechten Seite des Körpers (10) angebracht ist, wobei der Motor (30) aufweist:
einen ersten Motor (31), der zum Drehen des ersten Antriebsrads (21) konfiguriert ist; und
einen zweiten Motor (32), der zum Drehen des zweiten Antriebsrads (22) konfiguriert ist, und
wobei die Steuerung (200) so konfiguriert ist, dass sie den ersten Motor (31) und den zweiten Motor (32) basierend auf vom Krafterfassungssensor (80) erfassten Kraft- und Torsionswerten antreibt.

## Revendications

1. Chariot, comprenant :
une carrosserie (10) présentant des roues motrices (20) montées sur des côtés gauche et droit de celle-ci ;
un moteur (30) pour faire tourner les roues motrices (20) ;
un châssis (50) comprenant une partie inférieure (51) reliée à la carrosserie (10), le châssis (50) s'étendant vers le haut depuis la partie inférieure (51) ;
une poignée (70) reliée au châssis (50) ;
une unité de capteur (610) comprenant un capteur tactile configuré pour détecter si la poignée (70) est ou non prise ; et
un dispositif de commande (200) configuré pour réaliser une commande de sorte qu'une opération de freinage soit réalisée de différentes manières selon que le moteur (30) est ou non en rotation à la détermination que la poignée (70) n'est pas prise sur la base de données détectées par le capteur tactile,
**caractérisé par** :
l'unité de capteur (610) comprenant un capteur d'inclinaison configuré pour détecter une inclinaison de la carrosserie (10), et
le dispositif de commande (200) étant configuré
pour déterminer si le chariot est ou non situé sur une pente sur la base de données détectées par le capteur d'inclinaison à la détermination que la poignée (70) n'est pas prise sur la base de données détectées par le capteur tactile, et
pour changer un paramètre de commande du moteur (30) selon que le chariot est ou non situé sur une pente.

2. Chariot selon la revendication 1, dans lequel l'unité de capteur (610) comprend en outre un capteur de détection de position (705a, 705b) configuré pour détecter une rotation du moteur (30).

3. Chariot selon la revendication 1 ou 2, comprenant en outre :
un détecteur de courant de sortie (E) configuré pour détecter un courant de sortie délivré au moteur (30),
dans lequel le dispositif de commande (200) est configuré pour déterminer une rotation du moteur (30) sur la base du courant de sortie détecté.

4. Chariot selon la revendication 1, 2 ou 3, dans lequel le dispositif de commande (200) est configuré pour ajuster une vitesse de rotation inverse du moteur (30) par rapport à une direction de rotation du moteur (30) sur la base d'une inclinaison de la pente.

5. Chariot selon l'une quelconque des revendications 1 à 4, dans lequel, à la détermination qu'une inclinaison de la pente est supérieure ou égale à une valeur d'inclinaison de seuil, le dispositif de commande (200) est configuré pour freiner les roues motrices (20).

6. Chariot selon l'une quelconque des revendications 1 à 5, dans lequel, à la détermination que le chariot est situé sur une pente, le dispositif de commande (200) est configuré pour réduire une constante de commande intégrale et une constante de commande dérivée parmi des constantes de commande proportionnelle-intégrale-dérivée (PID) du moteur (30).

7. Chariot selon l'une quelconque des revendications 1 à 5, dans lequel, à la détermination que le chariot est situé sur une pente, le dispositif de commande (200) est configuré pour réaliser une commande proportionnelle (P) sur le moteur (30), et dans lequel, à la détermination que le chariot est situé sur un sol plat, le dispositif de commande (200) est configuré pour réaliser une commande PID sur le moteur (30).

8. Chariot selon l'une quelconque des revendications 1 à 7, dans lequel, à la détermination que le chariot est situé sur un sol plat et que le moteur (30) est en rotation, le dispositif de commande (200) est configuré pour réaliser une opération de freinage par la commande au moteur (30) de tourner dans une direction opposée à une direction de rotation du moteur (30).

9. Chariot selon l'une quelconque des revendications 1 à 8, dans lequel, à la détermination que le chariot est situé sur un sol plat et que le moteur (30) n'est pas en rotation, le dispositif de commande (200) est configuré pour arrêter d'appliquer un courant au moteur (30).

10. Chariot selon l'une quelconque des revendications 1 à 9, dans lequel, à la détermination que le chariot est situé sur une pente et que le moteur (30) est en rotation, le dispositif de commande (200) est configuré pour réaliser une opération de freinage par la commande au moteur (30) d'inverser la direction de rotation.

11. Chariot selon l'une quelconque des revendications 1 à 10, dans lequel, à la détermination que le chariot est situé sur une pente et que le moteur (30) n'est pas en rotation, le dispositif de commande (200) est configuré pour maintenir une application de courant au moteur (30).

12. Chariot selon l'une quelconque des revendications 1 à 11, dans lequel l'unité de capteur (610) comprend en outre un capteur de détection de force (80) configuré pour détecter une force appliquée à la poignée (70), et
dans lequel le dispositif de commande (200) est configuré pour commander le moteur (30) sur la base de données détectées par le capteur de détection de force (80).

13. Chariot selon la revendication 12, dans lequel le châssis (50) est situé au milieu entre les roues motrices (20) dans une direction gauche-droite,
dans lequel la poignée (70) comprend une barre gauche (71) et une barre droite (72), la barre gauche (71) et la barre droite (72) étant espacées l'une de l'autre dans la direction gauche-droite à une position correspondant au châssis (50), et
dans lequel le capteur de détection de force (80) est relié à la barre gauche (71) et à la barre droite (72) et est couplé au châssis (50).

14. Chariot selon la revendication 13, dans lequel le capteur de détection de force (80) comprend :
une première unité de capteur (81) reliée à la barre gauche (71) ;
une deuxième unité de capteur (82) reliée à la barre droite (72) ; et
un support (85) reliant la première unité de capteur (81) et la deuxième unité de capteur (82), le support (85) étant couplé au châssis (50).

15. Chariot selon la revendication 12, dans lequel les roues motrices (20) comprennent :
une première roue motrice (21) montée sur un côté gauche de la carrosserie (10) ; et
une deuxième roue motrice (22) montée sur un côté droit de la carrosserie (10), dans lequel le moteur (30) comprend :
un premier moteur (31) configuré pour faire tourner la première roue motrice (21) ; et
un deuxième moteur (32) configuré pour faire tourner la deuxième roue motrice (22), et
dans lequel le dispositif de commande (200) est configuré pour entraîner le premier moteur (31) et le deuxième moteur (32) sur la base de grandeurs de force et de torsion détectées par le capteur de détection de force (80).
